# EUROPÄISCHE PATENTANMELDUNG

(11) **EP 1 134 193 A2**
(43) Veröffentlichungstag der Anmeldung: **19.09.2001**
(21) Anmeldenummer: 01105081.2
(22) Anmeldetag: 02.03.2001
(51) Int. Cl.: C02F 3/20

(54) **Vorrichtung zum Belüften von Wasser**

(30) Priorität: 10.03.2000 DE 10011326
(71) Anmelder: GUMMI-JÄGER KG GMBH & CIE, D-30625 Hannover (DE)
(72) Erfinder: Jäger, Arnold, 31303 Burgdorf (DE)
(74) Vertreter: Depmeyer, Jochen

(57) **Zusammenfassung**

Die Erfindung betrifft eine langgestreckte Vorrichtung zum Belüften von Wasser mit einem rohrförmigen Stützkörper und einem diesen umschliessenden geschlitzten Mantel aus Gummi od. dgl., wobei über die sich öffnenden Schlitze feine Bläschen in das Wasser gelangen. Um eine gleichmässige, verlustarme Besckickung des Mantels bei langen Vorrichtungen zu erreichen, ist erfindungsgemäss der Mantel an seiner Innenseite mit einer oder mehreren nutenartigen, längs verlaufenden Aussparungen versehen.

## Beschreibung

Die Erfindung betrifft eine langgestreckte Vorrichtung zum feinblasigen Belüften von Wasser mit einem starren, vorzugsweise rohrförmigen Stützkörper und einem diesen umschliessenden, stellenweise geschlitzten, aus einem Elastomer bestehenden, schlauchförmigen Mantel, wobei die über die Schlitze des Mantels in das Wasser einzuleitende, vorgespannte Luft der Vorrichtung zwischen Mantel und Stützkörper eingeführt wird.

Diese Vorrichtungen sind meist an im Durchmesser grössere Zuführungsleitungen - hierzu quer verlaufend - über Armaturen angeschlossen. Wünschenswert sind hierbei möglichst lange Vorrichtungen, wobei jedoch das Problem entsteht, die an einem Ende der Vorrichtung zuzuführende Luft derart einzuleiten, dass über die gesamte Länge der Vorrichtung hinweg die dort vorhandenen feinen Schlitze im Mantel der Vorrichtung möglichst gleichmässig beschickt werden.

Die Erfindung geht von der Erkenntnis aus, dass der schlauchförmige Mantel in aller Regel als Spritzkörper hergestellt ist und demgemäss Veränderungen an seiner Querschnittsgestalt zulässt.

Ausgehend von dieser Erkenntnis soll aufgrund der Erfindung die Aufgabe gelöst werden, dem Ziel einer möglichst geleichmässigen, verlustarmen Beschickung mit vorgespannter Luft bei vergleichsweise langen Vorrichtungen näherzukommen.

Zu Lösung dieser Aufgabe ist erfindungsgemäss der Mantel ausserhalb seines geschlitzten Querschnittsbereichs mit einer oder mehreren längs zum Mantel verlaufenden nutenartigen Aussparungen an seiner Innenseite versehen. Zweckmässigerweise ist dabei die Wandung des Mantels im Bereich der Aussparungen verdickt, um so den Mantel zu verstärken und unerwünschten Verformungen des Mantels unter dem von aussen einwirkenden Wasserdruck entgegenzutreten, zugleich aber auch die Gestalt des Mantels zu stabilisieren.

Die so vorgesehenen nutenartigen Aussparungen, die aus Festigkeitsgründen vorzugsweise als ausgerundete Hohlkehle ausgeführt werden, setzen der zuzuführenden Luft wenig Widerstand entgegen und transportieren die Luft ohne weiteres über grössere Distanzen, wobei dann die Luft lateral zu beiden Seiten der Aussparungen bzw. quer zu ihrer Längsersteckung in die geschlitzte Bereiche des Mantels entweichen kann.

Vorzugsweise werden diese Aussparungen in dem beim Gebrauch der Vorrichtung unten liegenden Bereiche vorgesehen, obwohl es auch möglich ist, die Aussparungen seitlich und dann vorzugsweise beidseitig anzuordnen.

Weitere Einzelheiten der Erfindung werden anhand der Zeichnung erläutert, in der Ausführungsbeispiele der 'Erfindung dargestellt sind. Es zeigen :
Fig. 1 eine Teilseitenansicht einer Vorrichtung zum Feinbelüften von Wasser - teilweise geschnitten -,
Fig. 2 eine Stirnansicht der Vorrichtung gemäss Fig. 1 in Richtung des Pfeiles a gesehen,
Fig. 3 eine Teilseitenansicht der Vorrichtung gemäss Fig. 2 in Richtung des Pfeiles b gesehen und
Fig. 4 und 5 je.Stirn- bzw. Teilstirnansichten abgewandelter Ausführungsformen der Erfindung, und zwar Ansichten, die einer Ansicht in Richtung des Pfeiles a gesehen entsprechen.

Ein meist aus starrem, steifen Kunststoff bestehendes Stützrohr 1 ist von einem aus Gummi oder gummiähnlichem Kunststoff bestehenden Mantel 2 mit Spiel umschlossen. Diese langgestreckte, gerade verlaufende Vorrichtung ist meist Bestandteil eines Belüftungssystems, das auch über ein Luftzuführungsrohr verfügt, an dem die erfindungsgemässe Vorrichtung - quer zu diesem Rohr verlaufend - befestigt ist. Die Befestigungseinrichtung dient gleichzeitig der Luftzufuhr für die erfindungegemässe Vorrichtung, wobei die vorgespannte Luft im Sinne der Pfeile x zwischen Mantel 2 und dem nicht perforierten, aussen glatten Stützrohr 1 geführt wird, sodass die feinen Bläschen nach oben hin entweichen können.

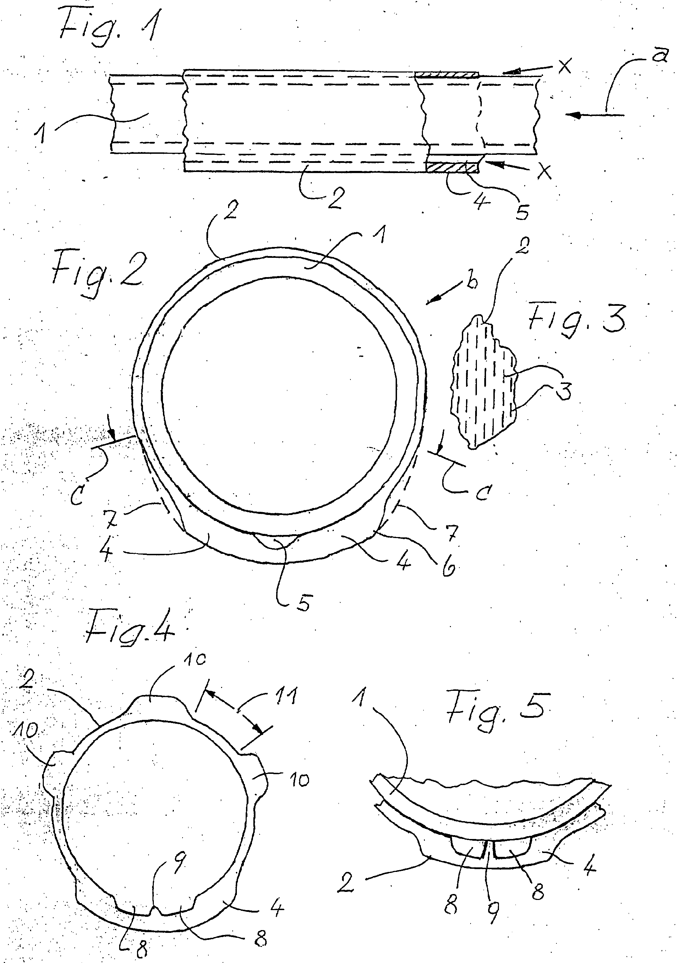

Damit der Mantel 2 feine Blasen abgeben kann, ist er über einen Teil seines Umfangs mit feinen, durchgehenden Schlitzen 3 versehen, wie dies in Fig. 3 aufgezeigt ist. Diese öffnen sich unter dem Luftinnendruck und schliessen sich wasserdicht, wenn der Druck abfällt bzw. die Vorichtung drucklos wird. Bei der Vorrichtung gemäss Fig. 1 bis 3 ist der grösste Umfangsbereich des Mantels 2 über den Zenit hinweg perforiert, der bei c seitlich begrenzt ist.

Der Mantel 2 ist in dem beim Gebrauch der Vorrichtung unten liegenden Bereich etwa auf einem Viertel seines Umfangs verdickt. Dieser Bereich ist mit 4 bezeichnet; er hat eine Wandstärke, die etwa zwei- bis viermal grösser ist als die Wandstärke des Mantels 2 im übrigen Bereich seines Umfangs. Wichtig ist nun, dass der Mantel 2 an der Innenseite mittig im Bereich 4 mit einer ausgerundeten Längsnut 5 versehen ist, deren Tiefe in etwa das Ein- bis Zweifache der Wandstärke des Mantels 12 entspricht. Diese als durchlaufende, sich über die gesamte Länge des Mantels 2 erstreckende Aussparung dient als besonderer Luftkanal, der radial nach innen durch den steifen Stützkörper 1 begrenzt ist; die Aussparung führt die vorgespannte Luft ungehindert über die gesamte Länge der Vorrichtung. Von der Längsnut 5 aus gelangt die Luft zur Seite hin in den perforierten Bereich des Mantels und schliesslich über die Schlitze 3 als feine Perlen in das Wasser.

Gemäss Fig. 2 kann der Bereich 4 über eine Schulter 6 in den eigentlichen Mantelkörper übergehen, jedoch kann auch - wie durch gestrichelte Linien 7 angedeutet- ein allmählicher Übergang angewendet werden.

Gemäss Fig. 4 und 5 kann die Längsnut 5 verbreitert werden unter Bildung eines Doppelkanals mit zwei Einzelkanälen 8, die durch eine stegartige Stütze 9 voneinander getrennt sind.

Bei der Ausführung gemäss Fig. 4 ist der Mantel 1 im oberen Bereich durch drei im Abstand voneinander angeordnete wulstartige Verdickungen 10 verstärkt und stabilisiert, wobei eine symmetrische Anordnung vorgesehen ist. Zwischen diesen Verdickungen 10 befinden sich Bereiche 11, die im Sinne der Fig. 3 geschlitzt sind.

## Patentansprüche

1. Langgestreckte Vorrichtung zum feinblasigen Belüften von Wasser mit einem starren, vorzugsweise rohrförmigen Stützkörper und einem diesen umschliessenden, stellenweise geschlitzten, aus einem Elastomer bestehenden, schlauchförmigen Mantel, wobei die über die Schlitze des Mantels in das Wasser einzuleitende vorgespannte Luft der Vorrichtung zwischen Mantel und Stützkörper eingeführt wird, **dadurch gekennzeichnet, dass** der Mantel (2) ausserhalb seines geschlitzten Querschnittsbereichs an seiner Innenseite mit einer oder 'mehreren, längs zum Mantel (2) verlaufenden nutenartigen Ausparungen (5,8) versehen ist.

2. Vorrichtung nach Anspruch 1, **dadurch gekennzeichnet, dass** der Mantel (2) im Bereich seiner Aussparungen (5,8) verdickt ist.

3. vorrichtung nach Anspruch 1, **dadurch gekennzeichnet, dass** die Aussparungen (5) im Querschnitt nach Art einer gerundeten Hohlkehle ausgeführt sind.

4. Vorrichtung nach Anspruch 1, **dadurch gekennzeichnet, dass** benachbarte Ausparungen (8) durch einen Stützsteg (9) voneinander getrennt sind.

5. Vorrichtung nach Anspruch 1, dadurch gekennzeichnt, dass sich die Aussparungen (5,8) in dem beim Gebrauch der Vorrichtung unten gelegenen Querschnittsbereich der Vorrichtung befinden.

6. Vorrichtung nach Anspruch 1, **dadurch gekennzeichnet, dass** der Mantel (2) mit einer oder mehreren, vorzugsweise im oberen Querschnittsbereich des Mantels (2) befindlichen wulstartigen Verdickungen (10) versehen ist.

7. Vorrichtung nach Anspruch 6, **dadurch gekennzeichnet, dass** der Mantel (2) zwischen den Verdickungen (10) geschlitzt ist ( Bereiche 11).

8. Vorrichtung nach Anspruch 1, **dadurch gekennzeichnet, dass** die Tiefe der Aussparungen (5) etwa dem Ein- bis Zweifachen der Wandstärke des Mantels (2) in seinem geschlitzten Bereich entspricht.

9. Vorrichtung nach Anspruch 1, **dadurch gekennzeichnet, dass** die Wandstärke des Mantels (2) im verdickten Bereich etwa zwei- bis viermal grösser ist im Vergleich zur Wandstärke im geschlitzten Bereich.
